Europäisches Patentamt

**European Patent Office**

**Office européen des brevets**

(19)

(11) Veröffentlichungsnummer: **0 004 009**
**B1**

(12) **EUROPÄISCHE PATENTSCHRIFT**

(45) Veröffentlichungstag der Patentschrift: **10.02.82**

(21) Anmeldenummer: **79100557.2**

(22) Anmeldetag: **23.02.79**

(51) Int. Cl.³: **H 01 B 12/00, H 01 F 7/22**

(54) Supraleiteraufbau und Verfahren zu seiner Herstellung.

(30) Priorität: **06.03.78 DE 2809573**

(43) Veröffentlichungstag der Anmeldung:
**19.09.79 Patentblatt 79/19**

(45) Bekanntmachung des Hinweises auf die Patenterteilung:
**10.02.82 Patentblatt 82/6**

(84) Benannte Vertragsstaaten:
**CH FR GB**

(56) Entgegenhaltungen:
**DE - A - 2 602 734**
**FR - A - 1 519 556**
**US - A - 3 527 873**

(73) Patentinhaber: **SIEMENS AKTIENGESELLSCHAFT**
**Berlin und München**
**Postfach 22 02 61**
**D-8000 München 22 (DE)**

(72) Erfinder: **Marsing, Helmut**
**Lerchenweg 8**
**D-8524 Neunkirchen a.Br. (DE)**

Courier Press, Leamington Spa, England.

Supraleiteraufbau und Verfahren zu seiner Herstellung

Die Erfindung bezieht sich auf einen Supraleiteraufbau mit mindestens einem in Leiterlängsrichtung langgestreckten inneren Supraleiter, der bandförmig gestaltet und mit normalleitendem Material stabilisiert und von einer Hülle aus einem um ihn gebogenen Blech umgeben ist, das aus einem Verstärkungsmaterial mit einer gegenüber dem normalleitenden Stabilisierungsmaterial des Supraleiters höheren mechanischen Festigkeit besteht, und mit Hohlräumen, die zwischen dem Hüllblech und dem inneren bandförmigen Supraleiter ausgebildet sind und in Längsrichtung verlaufen und jeweils einen Kanal zur Führung eines Kühlmediums bilden. Die Erfindung bezieht sich ferner auf ein Verfahren zur Herstellung eines solchen Supraleiteraufbaus.

Zur Erzeugung starker Magnetfelder mit großer räumlicher Ausdehnung können vorteilhaft Magnetwicklungen mit Supraleitern verwendet werden. Als Leitermaterialien kommen hierfür z.B. Niob-Zirkon- oder Niob-Titan-Legierungen sowie Niob-Zinn-Verbindungen in Frage. Leiter aus diesen Supraleitermaterialien sind im allgemeinen mit normalleitendem Material stabilisiert, beispeilsweise in eine Matrix aus diesem Material eingebettet. Mit dieser Maßnahme soll eine Zerstörung der Supraleiter im Falle eines unkontrollierten Übergangs seiner aus dem Supraleitermaterial bestehenden Teile vom supraleitenden in den normalleitenden Zustand vermieden werden. Wenn die Supraleiter mit Hilfe eines Kühlmittels, im allgemeinen mit Hilfe von flüssigem Helium, auf eine Temperatur unterhalb der sogenannten kritischen Temperatur des für die Leiter verwendeten Supraleitermaterials abgekühlt werden, verschwindet praktisch vollständig ihr ohmscher Widerstand. Infolge des entsprechend verringerten Energiebedarfs bieten deshalb Supraleitungsmagnete gegenüber konventionellen Magneten mit Wicklungen aus elektrisch normalleitendem Material wie beispielswiese Kupfer den Vorteil, daß man mit ihnen stärkere Magnetfelder und somit auch stärkere Magnetfeldgradienten erreichen kann. Derartige supraleitende Magnetwicklungen sind vorteilhaft für Fusionsreaktoren geeignet, deren starke Magnetfelder dazu dienen, ein heißes Plasma mittels magnetischer Kräfte zusammenzuhalten und damit einen Fusionsvorgang in dem Plasma zu ermöglichen. Darüber hinaus können entsprechende supraleitende Wicklungen auch zur Ablenkung oder Fokussierung eines Strahls von geladenen Teilchen, beispielsweise in Teilchenbeschleunigern, verwendet werden.

Die Wicklungen solcher Supraleitungsmagnete müssen häufig aus mehreren Wicklungslagen aufgebaut werden. Dabei sind die Supraleiter in Abhängigkeit von ihrer Strombelastung und den Windungszahlen der Magnete hohen Zugkräften in Leiterlängsrichtung und Druckkräften senkrecht zur Leiterachse ausgesetzt. Die Supraleiter müssen diese Kräfte aufnehmen können, ohne daß Beschädigungen ihrer aus supraleitendem Material bestehenden Teile aufgrund von Deformationen zu befürchten sind. Außerdem müssen derartige Leiter gegen mechanische Instabilitäten, die durch Leiterbewegungen hervorgerufen werden, besonders gesichert sein, da diese Instabilitäten zu Leitererwärmungen und somit zu einem Normalleitend-Werden des Supraleiters führen können.

Um derartige Kräfte aufnehmen zu können, kann man die im allgemeinen bandförmig ausgebildeten Supraleiter jeweils mit einer Hülle umgeben, die aus einem Verstärkungsmaterial besteht, das gegenüber dem normalleitenden Stabilisierungsmaterial des Supraleiters eine höhere mechanische Festigkeit hat. Ein entsprechender Supraleiteraufbau ist aus der DE—OS 26 02 734 bekannt. In einer Magnetwicklung kann sich dann ein solcher Supraleiteraufbau von dem ihm benachbarten Supraleiteraufbau unmittelbar über diese Hüllen abstützen. Bei dieser Abstützungsweise können zwar große Kräfte übertragen werden, im allgemeinen ist jedoch zwischen benachbarten Hüllen kein Raum zur Führung eines zur Kühlung der Supraleiter erforderlichen Kühlmittels vorhanden. Darüber hinaus ist im allgemeinen auch die Wärmeleitfähigkeit des Verstärkungsmaterials der Hüllen im Vergleich zum Stabilisierungsmaterial der Supraleiter geringer. Deshalb enthält bei dem bekannten Supraleiteraufbau der von der Hülle eingeschlossene Innenraum, in dem auch der eigentliche Supraleiter angeordnet ist, zusätzlich mehrere Hohlräume, die zur Führung eines Kühlmittels in Leiterlängsrichtung dienen.

Der bekannte Supraleiteraufbau wird dadurch hergestellt, daß man einen bandförmigen Supraleiter, der ein normalleitendes Matrixmaterial, beispielsweise aus Kupfer, enthält, in das einzelne supraleitende Adern eingebettet sind, in einer entsprechenden Aussparung zwischen zwei aneinanderzufügende Abstützteile aus ebenfalls normalleitendem Material, beispielsweise dem Matrixmaterial, anordnet. Die beiden Abstützteile bilden somit einen Körper aus dem normalleitenden Material, in dem der eigentliche Supraleiter eingeschlossen ist. Darüber hinaus sind in dem aus den Abstützteilen gebildeten Körper noch als Kühlkanäle dienende Hohlräume vorgesehen. Nachdem die beiden Abstützteile untereinander zu dem Körper zusammengefügt, beispielsweise verschweißt sind, werden sie zusätzlich zur Erhöhung der mechanischen Festigkeit auf ihrer Außenseite mit einem Mantel aus einem Stahlblech vollständig umhüllt. Hierzu biegt man das Blech um den aus den beiden Abstützteilen gebildeten gemeinsamen Körper herum und verschweißt es an seinen in Leiterlängsrichtung aneinanderstoßenden Längsseiten. Die Herstellung eines solchen Supraleiteraufbaus ist jedoch insbesondere wegen der erforderlichen Abstützteile verhältnismäßig aufwendig.

Ein Supraleiteraufbau der eingangs genannten Art ist aus der US—PS 3,527,873 bekannt. Er ist aus zwei gleichen Hälften zusammengesetzt und enthält einen inneren stabilisierten Supraleiter, der von einem Hüllblech eingeschlossen ist. In dem Hüllblech sind in Längsrichtung des Aufbaus verlaufende rinnenartige Vertiefungen vorgesehen. Zwischen dem Supraleiter und dem um ihn gebogenen Hüllblech sind somit Hohlräume in Längsrichtung ausgebildet, die jeweils als Kanal zur Führung eines Kühlmediums dienen. Da das Hüllblech eine verhältnismäßig geringe Stärke hat, ist der Strömungsquerschnitt dieser Kanäle für eine ausreichende Kühlung des Supraleiters zu klein. Im Inneren des Supraleiters ist deshalb noch ein zusätzlicher zentraler Kühlmittelführungskanal mit verhältnismäßig großem Strömungsquerschnitt vorgesehen.

Aus der FR—PS 1.519.556 ist ferner eine supraleitende Magnetwicklung bekannt, die aus einem bandförmigen stabilisierten Supraleiter gewickelt ist. Zur Beabstandung benachbarter Windungen ist zwischen ihnen ein Blech aus einem Material hoher Festigkeit wie z.B. aus Stahl angeordnet, das mäanderförmig vorprofiliert ist (Fig. 5 und 6). Die so vorhandenen, als Kühlmittelführungskanäle dienenden Vertiefungen dieses mit dem Supraleiter mechanisch nicht verbundenen Bleches verlaufen jedoch senkrecht zur Längsrichtung des Supraleiters. Außerdem ist eine hohe Kraftübertragung über dieses Blech nicht ohne weiteres möglich.

Aufgabe der vorliegenden Erfindung ist es deshalb, den Supraleiteraufbau der eingangs genannten Art dahingehend zu verbessern, daß er sich verhältnismäßig einfach herstellen läßt, ohne daß die Kühlung des in ihm eingeschlossenen Supraleiters und seine hohe Kräfteaufnahmefähigkeit beeinträchtigt werden.

Diese Aufgabe wird erfindungsgemäß dadurch gelöst, daß das um den Supraleiter gebogene Blech der Hülle mäanderförmig vorprofiliert ist und daß die dadurch entstandenen äußeren rinnenartigen Vertiefungen der Hülle mit Füllstreifen solcher Stärke ausgefüllt sind, daß eine zumindest annähernd glatte Außenfläche des Supraleiteraufbaus entsteht.

Die Vorteile dieser Gestaltung des Supraleiteraufbaus bestehen insbesondere darin, daß handelsübliche, fertige Bleche verwendet werden können, in welche die gewünschte Vorprofilierung, beispielsweise durch Sicken, eingebracht wird. Diese so vorprofilierten Bleche erfüllen dann eine Doppelfunktion. Zum einen läßt sich nämlich mit diesen Blechen und den Füllstreifen eine Hülle hoher mechanischer Festigkeit herstellen, welche die in einer großen Supraleitungsmagnetspule auftretenden Kräfte ohne unerwünschte Deformationen der Supraleiter aufnehmen kann. Zum anderen werden mit der besonderen Vorprofilierung der Bleche auf einfache Weise Kühlkanäle zur direkten Kühlung des Supraleiters ausgebildet, ohne daß zusätzliche Bauteile hierfür erforderlich wären. Ein solcher Supraleiteraufbau läßt sich deshalb verhältnismäßig einfach und dementsprechend kostengünstig herstellen.

Gemäß einer Weiterbildung des Supraleiteraufbaus nach der Erfindung bestehen die Füllstreifen vorteilhaft aus dem Material des vorprofilierten Bleches. Diese Füllstreifen können vorteilhaft in den äußeren, rinnenartigen Vertiefungen der Hülle durch Einwalzen oder Einschweißen oder Einkleben befestigt werden. Bei einer Abkühlung des Supraleiteraufbaus treten dann keine Schrumpfungsunterschiede zwischen dem Material der Hülle und dem der Füllstreifen auf, so daß damit auch die Verbindung zwischen den Füllstreifen und der Hülle nicht zusätzlich belastet wird.

Zur Herstellung eines solchen Supraleiteraufbaus gemäß der Erfindung wird ein glattes Blech zunächst mit einer vorbestimmten Breite in einem spanlosen Formgebungsschritt zu einem Blech mit den rinnenartigen Vertiefungen geformt. Anschließend wird das so vorprofilierte Blech um den bandförmigen Supraleiter herumgelegt und zu einer Hülle geschlossen, und schließlich werden in die äußeren rinnenartigen Vertiefungen der Hülle die Füllstreifen eingebracht und dort befestigt.

Bei diesem Verfahren können besonders vorteilhaft die Verfahrensschritte des Herumlegens des Hüllbleches um den Supraleiter, des Schließens des Bleches zu einer Hülle sowie des Einbringens der Füllstreifen in die rinnenartigen Vertiefungen und deren Befestigung in den Vertiefungen ohne Unterbrechung ineinander übergehen. Dieses Verfahren kann besonders kostengünstig durchgeführt werden.

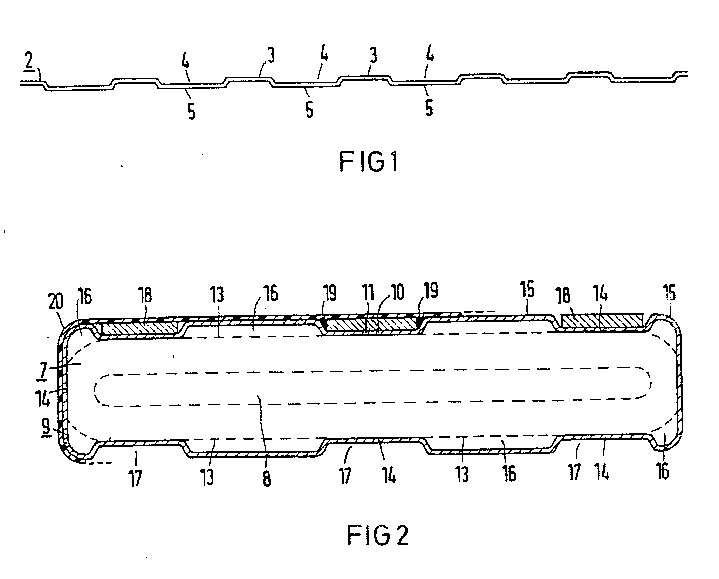

Zur weiteren Erläuterung der Erfindung und deren in den Unteransprüchen gekennzeichneten Weiterbildungen wird auf die Zeichnung Bezug genommen, in deren Fig. 1 schematisch ein vorprofiliertes Band für eine Hülle des Supraleiteraufbaus gemäß der Erfindung veranschaulicht ist. Fig. 2 zeigt schematisch ein Ausführungsbeispiel eines solchen Supraleiteraufbaus.

Das in Fig. 1 als Querschnitt dargestellte Metallband 2 besteht aus einem Material, das eine vergleichsweise höhere mechanische Festigkeit als die zur Stabilisierung von Supraleitern allgemein verwendeten normalleitenden Materialien hat. Als Bandmaterial kann deshalb beispielsweise VA-Stahl vorgesehen sein. Das Metallband 2 ist in einem spanlosen Formgebungsverfahren so vorprofiliert, daß es in Längsrichtung verlaufende, streifenförmige Zonen 3 enthält, denen gegenüber die übrigen Zonen des Bandes vertieft angeordnet sind. Ein entsprechendes Formgebungsverfahren ist beispielsweise das Sicken oder ein anderes Profilierungswalzverfahren. In einem solchen Formgebungsschritt wird also das Band 2 über seinen Querschnitt gesehen zu mehreren rinnenartigen Vertiefungen 4 geformt, die sich untereinander parallel in Längsrichtung erstrecken. Die Anzahl und die Breite dieser rinnenartigen Vertiefungen 4 hängt von den Anforderungen an die mechanische Festigkeit der aus dem Metallband 2 herzustellenden Hülle ab. Die vertieft angeordneten, in der Figur mit 6 bezeichneten Bandzonen liegen in einer gemeinsamen Ebene, die parallel zur Ebene der ihnen gegenüber erhöht angeordneten Bandteil 3 verläuft. Im Querschnitt ergibt sich so eine mäanderartige Gestalt des Bandes 2.

Mit einem solchen vorprofilierten Metallband kann nun ein Supraleiteraufbau gemäß der Erfindung hergestellt werden. Eine Ausführungsform eines entsprechenden Supraleiteraufbaus ist in Fig. 2 als Querschnitt veranschaulicht. Zur Stromführung dieses Aufbaus dient ein zentraler, im Querschnitt etwa rechteckiger, bandförmiger Supraleiter 7, dessen Längskanten abgerundet sind. Dieser in der Figur nicht näher ausgeführte Supraleiter enthält Leiterteile aus Supraleitendem Material, die mit einem normalleitenden Material stabilisiert sind. Beispielsweise besteht er aus einer Kupfermatrix, in die supraleitende $Nb_3Sn$-Filamente eingelagert sind. Er kann auch aus einer Vielzahl von einzelnen stabilisierten Supraleitungsdrähten zu einem bandförmigen Gebilde zusammengefügt sein. Wie in der Figur ferner durch eine gestrichelte Linie angedeutet ist, kann der Supraleiter 7 einen zentralen Kern 8 als mechanische Verstärkung enthalten, der beispielsweise aus VA-Stahl besteht.

Um diesen zentralen Supraleiter 7 wird nun das in Fig. 1 dargestellte, vorprofilierte VA-Metallband zu einer gen Supraleiter 7 fest umschließenden Hülle 9 gebogen. Die Breite des Metallbandes ist dabei so bemessen, daß nach dem Biegevorgang die Längsseiten 10 und 11 des Bandes annähernd aneinanderstoßen. Diese Längsseiten können dann miteinander verschweißt, verklebt oder verlötet werden.

Aufgrund der mäanderartigen Querschnittsform des Metallbandes liegt die aus diesem Band gebildete Hülle 9 dann an der Oberfläche 13 des Supraleiters 7 nur teilweise direkt an. Diese anliegenden Zonen der Hülle sind in der Figur mit 14 bezeichnet. Die übrigen Zonen 15 sind somit gegenüber der Oberfläche 13 beabstandet, so daß zwischen ihnen und der Supraleiteroberfläche 13 jeweils ein sich in Leiterlängsrichtung erstreckender Hohlraum 16 entsteht. Durch diese Hohlräume 16 kann vorteilhaft ein Kühlmedium, beispielsweise flüssiges Helium, zur direkten Kühlung des Supraleiters 7 geführt werden.

Die in der Hülle 9 vorhandenen äußeren, rinnenartigen Vertiefungen 17 werden anschließend mit entsprechenden Metallstreifen 18 ausgefüllt, so daß die äußeren Oberflächen dieser Füllstreifen zusammen mit den benachbarten streifenförmigen Zonen der Hülle 9 eine zumindest annähernd glatte Außenfläche des Supraleiteraufbaus ergeben. Die Füllstreifen 18, von denen in der Figur nur einige in den Vertiefungen 17 der Hülle 9 ausgeführt sind, bestehen vorteilhaft aus dem Material der Hülle 9. Sie können zweckmäßig in den Vertiefungen 17 eingeklebt oder eingewalzt oder auch mit dem Metallband der Hülle 9 verschweißt sein. Auf diese Weise läßt sich auch die Hülle an den Längsseiten 10 und 11 des Metallbandes zu einem geschlossenen, fest den Supraleiter 7 umschließenden Gebilde zusammenfügen. In der Figur ist nur die entsprechende Verschweißung des mittleren, die beiden Längsseiten 10 und 11 abdeckenden Füllstreifens mit der Hülle 9 durch Schweißnähte 19 veranschaulicht, obwohl auch die übrigen Füllstreifen entsprechend befestigt sein können. Die Verschweißung kann beispielsweise mit einem Argonlichtbogen durchgeführt werden.

Der so hergestellte Supraleiteraufbau hat etwa rechteckigen Querschnitt mit abgerundeten Kanten und zumindest annähernd glatten Flächen. Er wird im allgemeinen noch mit einer in der Figur nur teilweist ausgeführten Isolation 20 versehen, beispielsweise umwickelt. Diese Isolation kann z.B. aus einem glasfaserverstärkten Kunststoff bestehen und gegebenenfalls auch die Füllstreifen 18 in den äußeren Vertiefungen 16 fixieren.

Mit einem solchen Supraleiteraufbau läßt sich nun vorteilhaft eine mehrlagige Magnetspule wickeln, deren gegenseitig isolierte Windungen direkt aneinanderliegen und hohe Zugkräfte in Richtung der Leiterachse und Druckkräfte senkrecht zu dieser Achse aufnehmen können.

## Patentansprüche

1. Supraleiteraufbau mit mindestens einem in Leiterlängsrichtung langgestreckten inneren Supraleiter (7), der bandförmig gestaltet und mit normalleitendem Material stabilisiert und von einer Hülle (9) aus einem um ihn gebogenen Blech (2) umgeben ist, das aus einem Verstärkungsmaterial mit einer gegenüber dem normalleitenden Stabilisierungsmaterial des Supraleiters (7) höheren mechanischen Festigkeit besteht, und mit Hohlräumen (16), die zwischen dem Hüllblech (2) und dem inneren bandförmigen Supraleiter (7) ausgebildet sind und in Längsrichtung verlaufen und jeweils einen Kanal zur Führung eines Kühlmediums bilden, dadurch gekennzeichnet, daß das um den Supraleiter (7) gebogene Blech (2) der Hülle (9) mäanderförmig vorprofiliert ist und daß die dadurch entstandenen äußeren rinnenartigen Vertiefungen (17) der Hülle (9) mit Füllstreifen (18) solcher Stärke ausgefüllt sind, daß eine zumindest annähernd glatte Außenfläche des Supraleiteraufbaus ensteht.

2. Supraleiteraufbau nach Anspruch 1, gekennzeichnet durch ein vorprofiliertes Blech (2) aus Stahl.

3. Supraleiter nach Anspruch 1 oder 2, gekennzeichnet durch Füllstreifen (18) aus dem Material des vorprofilierten Bleches (2).

4. Verfahren zur Herstellung eines Supraleiteraufbaus nach einem der Ansprüche 1 bis 3, dadurch gekennzeichnet, daß ein zunächst glattes Blech mit einer vorbestimmten Breite in einem spanlosen Formgebungsschritt zu einem Blech (2) mit den rinnenartigen Vertiefungen (4) geformt wird, anschließend das so vorprofilierte Blech (2) um den bandförmigen Supraleiter (7) herumgelegt und zu einer Hülle (9) geschlossen wird, und schließlich die Füllstreifen (18) in die äußeren rinnenartigen Vertiefungen (17) der Hülle (9) eingebracht und dort befestigt werden.

5. Herstellungsverfahren nach Anspruch 4, gekennzeichnet durch ein Sicken des zunächst glatten Bleches.

6. Herstellungsverfahren nach Anspruch 4, dadurch gekennzeichnet, daß das zunächst glatte Blech in einer Profilierungswalzvorrichtung eine im Querschnitt mäanderartige Gestalt erhält.

7. Herstellungsverfahren nach einem der Ansprüche 4 bis 6, gekennzeichnet durch Verschweißen, Verkleben oder Verlöten der aneinanderstoßenden Längsseiten (10, 11) des Bleches (2).

8. Herstellungsverfahren nach einem der Ansprüche 4 bis 7, gekennzeichnet durch Einwalzen, Einschweißen oder Einkleben der Füllstreifen (18) in den rinnenartigen Vertiefungen (17).

9. Herstellungsverfahren nach einem der Ansprüche 4 bis 8, dadurch gekennzeichnet, daß die geschlossene Hülle (9) einschließlich der in ihren äußeren, rinnenartigen Vertiefungen (17) angeordneten Füllstreifen (18) von einer Isolation (20) umgeben wird.

10. Herstellungsverfahren nach Anspruch 9, gekennzeichnet durch ein Umspinnen der Hülle (9) einschließlich der Füllstreifen (18) mit dem Isolationsmaterial.

11. Herstellungsverfahren nach Anspruch 10, gekennzeichnet durch ein Umspinnen mit einem glasfaserverstärkten Kunststoffband.

12. Herstellungsverfahren nach einem der Ansprüche 4 bis 11, gekennzeichnet durch ohne Unterbrechung ineinander übergehende Verfahrensschritte des Herumlegens des Hüllbleches (2) um den Supraleiter (7), des Schließens des Bleches (2) zu einer Hülle (9) sowie des Einbringens der Füllstreifen (18) in die rinnenartigen Vertiefungen (17) und deren Befestigung in den Vertiefungen (17).

## Claims

1. A superconductor construction having at least one inner superconductor (7) which extends in the longitudinal direction of the conductor, is of strip-shaped form, is stabilised by material exhibiting normal conductivity, and is surrounded by a sleeve (9) made from a metal sheet (2) which is bent around it and which is itself made of a reinforcing material having a mechanical stability which is higher than that of the normally conducting stabilising material, of the superconductor (7), and having cavities (16) which are formed between the sheet metal sleeve (2) and the inner strip-shaped superconductor (7), which extend in the longitudinal direction and each of which forms a channel for conveying a cooling medium, characterised in that the metal sheet (2) of the sleeve (9) which is bent around the superconductor (7), has a pre-shaped serpentine profile, and that the external, channel-shaped recesses (17), which are thus formed in the sleeve (9), are filled with filling strips (18), the thickness of which is such that an at least approximately smooth outer surface of the superconductor construction results.

2. A superconductor construction as claimed in Claim 1, characterised by a pre-profiled metal sheet (2) made of steel.

3. A superconductor as claimed in Claim 1 or Claim 2, characterised by filler strips (18) made of the same material as is the pre-profiled metal sheet (2).

4. A process for the production of a superconductor construction as claimed in one of Claims 1 to 3, characterised in that an initially smooth metal sheet having a predetermined width is shaped in a non-cutting shaping step to form a metal sheet (2) provided with the channel-like recesses (4), whereafter the metal sheet (2), which has been so pre-profiled, is placed around the strip-shaped superconductor (7) and closed to form a sleeve (9), and finally the filling strips (18) are introduced into the external channel-shaped recesses (17) in the sleeve (9) and are fastened there.

5. A production process as claimed in Claim 4, characterised by a corrugation of the initially smooth metal sheet.

6. A production process as claimed in Claim 4, characterised in that the initially smooth metal sheet receives a serpentine cross-section in a profiling rolling device.

7. A production process as claimed in one of Claims 4 to 6, characterised by the welding, sticking, or soldering of the longitudinal sides (10, 11) of the metal sheet (2) which abut against one another.

8. A production process as claimed in one of Claims 4 to 7, characterised by the rolling, welding or sticking of the filling strips (18) into the channel-shaped recesses (17).

9. A production process as claimed in one of Claims 4 to 8, characterised in that the closed sleeve (9), including the filling strips (18) arranged in its external channel-shaped recesses (17), is surrounded by an insulation (20).

10. A production process as claimed in Claim 9, characterised by the spinning of the insulation material around the sleeve (9), including the filling strips (18).

11. A production process as claimed in Claim 10, characterised by spinning with a glass fibre-reinforced synthetic resin ribbon.

12. A production process as claimed in one of Claims 4 to 11, characterised by a series of process steps passing one into another without interruption, consisting of arranging the metal sheet (2) for the sleeve around the superconductor (7), closing the metal sheet (2) to form a sleeve (9), and introducing the filling strips (18) into the channel-shaped recesses (17) and fixing them therein.

## Revendications

1. Dispositif à supraconducteurs, comportant au moins un supraconducteur intérieur (7) qui s'étend dans la direction longitudinale du conducteur, qui se présente sous la forme d'une bande qui est stabilisée avec un matériau de conductibilité normale et qui est entouré d'une enveloppe (9) faite avec une tôle (2) pliée autour de lui et constituée par un matériau de renforcement à résistance mécanique supérieure à celle du matériau de stabilisation, à conductibilité normale, du supraconducteur (7), ainsi que des cavités (16) formées entre la tôle enveloppante (2) et le supraconducteur intérieur (7) en forme de bande et constituant, chacune, un canal de guidage d'un agent réfrigérant, caractérisé par le fait que la tôle (2) de l'enveloppe (9) qui est pliée autour du supraconducteur (7) est pré-profilée en méandres et que les dépressions ou cuvettes extérieures (17) en forme de rigoles ainsi formées dans l'enveloppe sont comblées avec des bandes de remplissage (18) d'une épaisseur telle qu'il se forme une surface extérieure du dispositif à supraconducteurs, qui est au moins à peu près lisse.

2. Dispositif à supraconducteurs selon la revendication 1, caractérisé par une tôle pré-profilée (2) en acier.

3. Supraconducteur selon la revendication 1 ou 2, caractérisé par des bandes de remplissage (18) faites avec le matériau de la tôle pré-profilée (2).

4. Procédé pour la fabrication d'un dispositif à supraconducteurs selon l'une des revendications 1 à 3, caractérisé par le fait qu'une tôle d'abord lisse, d'une largeur prédéterminée, est conformée dans une phase de fabrication par formage, en une tôle (2) à dépressions (4) en forme de rigoles, qu'en-suite la tôle (2) ainsi pré-profilée est placée autour du supraconducteur (7) en forme de bande et est fermée pour constituer une enveloppe (9), et qu'enfin des bandes de remplissage (18) sont introduites dans les dépressions extérieures (17) en forme de rigoles de l'enveloppe (9) et y sont fixées.

5. Procédé de fabrication selon la revendication 4, caractérisé par un moulurage de la tôle initalement lisse.

6. Procédé de fabrication selon la revendication 4, caractérisé par le fait que la tôle, d'abord lisse, reçoit, dans un dispositif de profilage par laminage, une forme, dans sa section transversale, du genre de méandres.

7. Procédé de fabrication selon l'une des revendications 4 à 6, caractérisé par soudure, collage ou brasure des côtés longitudinaux (10, 11) aboutés de la tôle (2).

8. Procédé de fabrication selon l'une des revendications 4 à 7, caractérisé par la fixation des bandes de remplissage (18) dans les dépressions (17) en forme de rigoles, par une opération de laminage, de soudage ou de collage.

9. Procédé de fabrication selon l'une des revendications 4 à 8, caractérisé par le fait que l'enveloppe fermée (9), y compris les bandes de remplissage (18) disposées dans les dépressions extérieures (17), en forme de rigoles, qu'elles présentent, sont entourées par un isolant (20).

10. Procédé de fabrication selon la revendication 9, caractérisé par le fait que l'enveloppe (9), y compris les bandes de remplissage (18), est entourée d'un matériau isolant.

11. Procédé de fabrication selon la revendication 10, caractérisé par le fait que ledit matériau isolant est constitué par une bande de matière plastique renforcée avec des fibres de verre.

12. Procédé de fabrication selon l'une des revendications 4 à 11, caractérisé par des phases opératoires qui se suivent sans interruption et qui consistent à placer la tôle-enveloppe (2) autour du supraconducteur (7), à fermer la tôle (2) pour en constituer une enveloppe (9) et par la mise en place de bandes de remplissage (18) dans les dépressions (17) en forme de rigoles et par leur fixation dans ces dernières.

0 004 009

FIG 1

FIG 2

1